(19) Europäisches Patentamt
European Patent Office
Office européen des brevets

(11) Publication number: **0 109 752 B1**

(12) # EUROPEAN PATENT SPECIFICATION

(45) Date of publication of patent specification: **29.06.88**

(51) Int. Cl.[4]: **A 01 N 43/88** // (A01N43/88, 43:40)

(21) Application number: **83306241.7**

(22) Date of filing: **14.10.83**

(54) **Selective, broadspectrum weed control in soybeans.**

(30) Priority: **19.10.82 US 435194**

(43) Date of publication of application: **30.05.84 Bulletin 84/22**

(45) Publication of the grant of the patent: **29.06.88 Bulletin 88/26**

(84) Designated Contracting States: **BE DE FR GB IT NL**

(56) References cited:
**EP-A-0 004 414**
**EP-A-0 043 349**

**RESEARCH DISCLOSURE, no. 213, January 1982, pages 480-482, no. 21324, Havant Hampshire, GB. "Inhibiting the antagonism between pyridyloxy-phenoxy alkanoate herbicides and benzothiadiazinone herbicides in post-emergent applications"**

(73) Proprietor: **THE DOW CHEMICAL COMPANY**
**2030 Dow Center Abbott Road P.O. Box 1967**
**Midland, MI 48640 (US)**

(72) Inventor: **Gerwick III, B. Clifford**
**3979 Mulberry Drive**
**Concord California 94519 (US)**

(74) Representative: **Allard, Susan Joyce et al**
**BOULT, WADE & TENNANT 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 109 752 B1

**Description**

The present invention relates to an improved method of selectively controlling grassy weeds and broadleaf weeds in soybean crops.

2-Pyridyloxy (or thio) phenoxy alkanoate grass herbicides are well known grass herbicides that are useful for selectively controlling annual and perennial grassy weeds in the presence of desirable broadleaf crops.

Benzothiadiazinone derivatives are also well-known as herbicides and especially as broadleaf active herbicides.

Pyridyloxy (or thio) phenoxy alkanoate herbicides are typically applied post-emergently in the presence of nonionic surfactants. To extend the weed control spectrum in a given application, it has been taught that pyridyloxy (or thio) phenoxy alkanoate herbicides be mixed with benzothiadiazinone broadleaf active herbicides and thereafter applied to unwanted vegetation to provide a broad spectrum herbicidal composition effective against grasses and broadleaf weeds. See for example, EP—A—0004414 which teaches combinations of pyridyloxyphenoxy derivatives and other herbicides.

In particular, EP—A—0004414, teaches combining the n-butyl ester of 2-(4-(5-trifluoromethyl)-2-pyridinyl)oxy)phenoxy propionic acid, i.e., commonly known as fluazifop-butyl herbicide, with bentazon and applying the combination to soybeans for selective broad spectrum weed control. A serious problem associated with the combination of fluazifop-butyl and bentazon when applied to soybean crops is an increase in phytotoxicity to the soybean plants. This is an especially annoying problem in view of the fact that the herbicidal activity to grasses of pyridyloxyphenoxy alkanoate herbicides is decreased when combined with benzothiadiazione derivatives. In fact, technical literature distributed by the manufacturer of this herbicide acknowledges the phytotoxicity of the combination of fluazifop-butyl and bentazon towards soybean and specifically recommends avoidance of the combination being applied to soybean crops.

EP—A—0043349 discloses broad spectrum herbicidal compositions containing bentazon and the propargyl ester of 4-(3′,5′-dichloropyridyl-2′-oxy)-a-phenoxy-propionic acid. These compositions are applied to soybean crops.

Research Disclosure (1982), January, No. 213, Pages 480—482, No. 21324, disclose a herbicidal composition comprising a crop oil, the n-butyl ester of 2-(4-(3-chloro-5-trifluoromethyl)-2-pyridinyl)oxy)phenoxy propionic acid and bentazon.

It has been found unexpectedly that certain pyridyloxy-phenoxy alkanoate grass herbicides that have a chlorine or fluorine substituent in the 3-position of the pyridine ring and a trifluoromethyl substituent, in the 5-position of the pyridine ring, when combined with benzothiadiazinone herbicides, exhibit less phytotoxicity or damage to soybean plants when the combination of herbicides is applied thereto, as compared to the combinations wherein the pyridyloxyphenoxy alkanoate herbicide contains hydrogen in the 3-position of the pyridine ring. It has also been found that no crop oil is needed in such compositions to obtain a reduced phytotoxicity.

According to the present invention there is provided a method of selectively controlling broadleaf weeds and grassy weeds in a soybean crop by the application of a combination consisting of

(a) a 2-(4-(3-chloro/fluoro)-5-(trifluoromethyl)-2-pyridinyl)oxy)-phenoxy propionic acid or an agriculturally acceptable salt, $C_{1-8}$ alkyl- or $C_3$—$C_6$ alkoxyalkyl-ester, or amide thereof;

(b) a benzothiadiazinone broadleaf weed herbicide having the formula

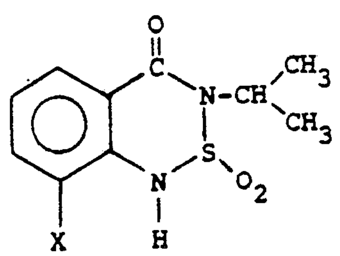

wherein

X is a hydrogen, chlorine, bromine or fluorine atom, a $C_{1-8}$ alkyl or nitro group; or a salt thereof.

Of particular interest is the combination of bentazon with 2-(4-(3-chloro-5-(trifluoromethyl)-2-pyridyl)oxy)phenoxy propionic acid and agriculturally acceptable salts, amides, $C_{1-8}$ alkyl- or $C_{3-6}$ alkoxyalkyl esters thereof. Also of interest is the combination of bentazon with 2-(4-(3-fluoro-5-trifluoromethyl)-2-pyridyl)oxy)phenoxy propionic acid and agriculturally acceptable salts, amides, $C_{1-8}$ alkyl- or $C_{3-6}$ alkoxyalkyl esters thereof. Agriculturally acceptable derivatives of the acids are those salts, amides and esters which possess herbicidal activity while being substantially non-phytotoxic to soybean plants. These herbicidal combinations provide broad spectrum weed control in soybean crops while exhibiting less phytotoxicity towards the soybean plants than the combination of bentazon and fluazifop-butyl, a pyridyloxyphenoxy propanoic acid ester having hydrogen as the substituent in the 3-position of the pyridine ring.

The pyridyloxy-phenoxy propionate grass herbicides used in the present invention are compounds of the formula

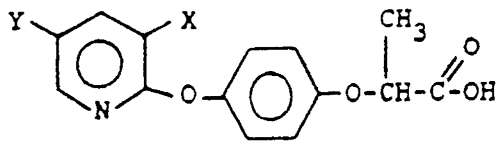

wherein

X represents Cl or F;

Y represents $CF_3$; and the agriculturally acceptable salts, amides, or $C_{1-8}$ alkyl- or $C_{3-6}$ alkoxyalkyl esters thereof.

Agriculturally acceptable salts, amides, and esters of the above pyridyloxy-phenoxy propionates include, for example, compounds of the formula

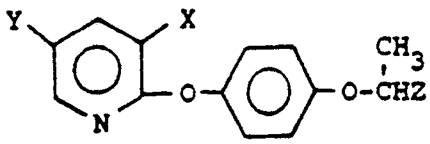

wherein

X and Y are as hereinbefore defined;

Z represents $-CO_2M$, $-CO_2R$, $-CONR'_2$;

M represents Na, K, Mg, Ca or $N(R'')_4$;

R represents $C_1-C_8$ alkyl or $C_3-C_6$ alkoxyalkyl;

each R' independently represents H or $C_1-C_4$ alkyl; and

R'' independently represents H, $C_1-C_4$ alkyl or $C_2-C_3$ hydroxyalkyl.

Specific pyridinyloxyphenoxy propionate herbicides within the scope of the present invention include, for example:

2-(4-(3-chloro-5-(trifluoromethyl)pyridyl)oxy)phenoxy propionic acid and agriculturally acceptable salts, $C_{1-8}$ alkyl- or $C_{3-6}$ alkoxyalkyl-esters thereof;

2-(4-(3-fluoro-5-(trifluoromethyl)pyridyl)oxy)phenoxy propionic acid and agriculturally acceptable salts, $C_{1-8}$ alkyl- or $C_{3-6}$ alkoxyalkyl-esters thereof;

methyl 2-(4-((3-chloro-5-(trifluoromethyl)-2-pyridinyl)oxy)phenoxy)propionate;

butyl 2-(4-((3-chloro-5-(trifluoromethyl)-2-pyridinyl)oxy)phenoxy)propionate;

ethoxy ethyl 2-(4-((3-chloro-5-(trifluoromethyl)-2-pyridinyloxy)phenoxy)propionate; and

1-methoxy-2-propyl 2-(4-((3-chloro-5-(trifluoromethyl)-2-pyridinyl)oxy)phenoxy propionate;

methyl 2-(4-((3-fluoro-5-(trifluoromethyl)-2-pyridinyl)oxy)phenoxy)propionate;

butyl 2-(4-((3-fluoro-5-(trifluoromethyl)-2-pyridinyl)oxy)phenoxy)propionate;

ethoxy ethyl 2-(4-((3-fluoro-5-(trifluoromethyl)-2-pyridinyl)oxy)phenoxy)propionate; and

1-methoxy-2-propyl 2-(4-((3-fluoro-5-(trifluoromethyl)-2-pyridinyl)oxy)phenoxy)propionate.

Specifically preferred benzothiadiazinone herbicides for use in the present invention include, for example:

8-chloro-3-(1-methylethyl)-1H-2,1,3-benzothiadiazin-4(3H)-one-2,2-dioxide;

8-nitro-3-(1-methylethyl)-1H-2,1,3-benzothiadiazin-4(3H)-one-2,2-dioxide;

8-fluoro-3-(1-methylethyl)-1H-2,1,3-benzothiadiazin-4(3H)-one-2,2-dioxide;

8-methyl-3-(1-methylethyl)-1H-2,1,3-benzothiadiazin-4(3H)-one-2,2-dioxide; and

3-(1-methylethyl)-1H-2,1,3-benzothiadiazin-4(3H)-one-2,2-dioxide, commonly known as bentazon.

Bentazon, a broadleaf active herbicide and a preferred compound, is a commercially available product sold under the trade name BASAGRAN.

In the practice of the present invention the pyridyloxy-phenoxy propionate grass herbicide and the benzothiadiazinone herbicide are formulated into a spray formulation using well known techniques. For example, bentazon, formulated as the water-soluble $Na^+$ salt, is mixed in water and thereafter 2-(4-(3-chloro-5-(trifluoromethyl)-2-pyridyl)oxy)phenoxy propionic acid or an ester thereof, such as the methyl, butyl or ethoxy ethyl ester, is added to the bentazon solution, with agitation, so that a uniform mixture is formed containing both herbicides.

Once prepared the compositions of the present invention are applied to soybean crops employing procedures well known in the art.

In one embodiment of the present invention, the $Na^+$ salt of bentazon is combined with an ester or salt of 2-(4-(3-chloro-5-(trifluoromethyl)-2-pyridyl)oxy)phenoxy propionic acid in an aqueous spray mixture and applied to soybeans for broad spectrum weed control.

In a preferred embodiment of the present invention, the $Na^+$ salt of bentazon and an ester of 2-(4-(3-chloro-5-(trifluoromethyl)-2-pyridyl)oxy)phenoxy propionic acid, formulated as an emulsifiable concentrate, are combined in an aqueous spray mixture in the presence of a surface active agent to facilitate leaf wetting and applied to soybeans for broad spectrum weed control.

The exact amount of herbicide applied will vary, depending on many factors, such as, for example, the particular herbicides employed, soil conditions, vegetative conditions, climatological conditions to name a few, and is readily determined by one skilled in the art.

When bentazon, employed as the benzothiadiazinone herbicide, is combined with an ester of 2-(4-(3-chloro-5-(trifluoromethyl)-2-pyridyl)oxy)phenoxy propanoic acid, employed as the pyridyloxyphenoxy herbicide, the bentazon is used in amounts to provide from 0.5 to 1.5 lbs/acre (0.56 to 1.68 kg/ha) and the ester of 2-(4-(3-chloro)-5-(trifluoromethyl)-2-pyridyl)oxy)phenoxy propionic acid is present in amounts to provide from 0.03 to 0.5 lbs/acre (0.034 to 0.56 kg/ha).

The following examples further illustrate the practice of the present invention.

Example 1

Various concentrations of fluazifop-butyl (formulated as a 2 lb/gal (0.24 kg/l) emulsifiable concentrate) and bentazon were combined in an aqueous tank mixture which included ORTHO® X—77 (0.25% v/v) brand surfactant. The combination was applied in the field to Giant Foxtail (growth stage: 4—6 leaf; 7.6—12.7 cm in height) and soybeans (growth stage: 3 trifoliate, 8 inches (20 cm) in height) and evaluated 1 and 2 weeks after treatment for percent control of Giant Foxtail and percent damage to soybeans. Results are listed in Table 1.

TABLE 1

| Run # | Kg Active Ingredient per hectare | | % Giant Foxtail Control (Weeks After Treatment) | | % Damage to Soybeans (Weeks After Treatment) | |
|---|---|---|---|---|---|---|
| | | | 1 | 2 | 1 | 2 |
| 1. | fluazifop-butyl | 0.14 kg/ha | 68 | 86 | 0 | 0 |
| 2. | fluazifop-butyl<br>bentazon | 0.14 kg/ha<br>0.84 kg/ha | 65 | 45 | 30 | 17 |
| 3. | fluazifop-butyl | 0.28 kg/ha | 73 | 89 | 2 | 5 |
| 4. | fluazifop-butyl<br>bentazon | 0.28 kg/ha<br>0.84 kg/ha | 67 | 70 | 30 | 17 |
| 5. | fluazifop-butyl | 0.56 kg/ha | 75 | 88 | 10 | 6 |
| 6. | fluazifop-butyl<br>bentazon | 0.56 kg/ha<br>0.84 kg/ha | 8 | 95 | 40 | 29 |

Example 2

Various concentrations of 2-(4-(3-chloro-5-(trifluoromethyl)-2-pyridinyl)oxy)phenoxy propionate, n-butyl ester (hereinafter "Cpd A") with bentazon were formulated and applied in the field as described in Example 1. The combination was applied in tank mixture to Giant Foxtail (3—6 leaf) and soybeans (1—2 trifoliates) and evaluated 1 and 2 weeks after treatment for percent control of Giant Foxtail and percent damage to soybeans. Results are listed in Table 2.

Example 3

Various concentrations of fluazifop-butyl formulated as an emulsifiable concentrate (0.24 kg/l) with BASAGRAN® brand bentazon and 2-(4-(3-chloro-5-(trifluoromethyl)-2-pyridinyl)oxy)phenoxy propionic acid, n-butyl ester (hereinafter "Cpd A") with BASAGRAN® brand bentazon were applied as aqueous mixtures in the presence of ATPLUS® 411F brand crop oil with emulsifiers to greenhouse grown soybeans. The soybeans were in the second (2nd) trifoliate leaf stage at the time of treatment and evaluated for injury 4 days after treatment. Results are listed in Table 3.

TABLE 2

| Run # | Kg active ingredient per hectare | Percent control Giant Foxtail (weeks after treatment) 1 | 2 | Percent damage to soybeans (weeks after treatment) 1 | 2 |
|---|---|---|---|---|---|
| 1 | Cpd. A 0.14 kg/ha | 93 | 98 | 0 | 0 |
| 2 | Cpd. A 0.14 kg/ha bentazon 0.84 kg/ha | 95 | 96 | 15 | 0 |
| 3 | Cpd. A 0.28 kg/ha | 95 | 99 | 0 | 0 |
| 4 | Cpd. A 0.28 kg/ha bentazon 0.84 kg/ha | 99 | 100 | 8 | 0 |

TABLE 3

| Amount of active ingredients in kg/ha | Average % injury to soybeans |
|---|---|
| 0.84 kg bentazon (alone) | 6.7 |
| 0.84 kg bentazon; 0.14 kg fluazifop-butyl | 18.3 |
| 0.84 kg bentazon; 0.28 kg fluazifop-butyl | 35 |
| 0.84 kg bentazon; 0.56 kg fluazifop-butyl | 50 |
| 0.84 kg bentazon; 0.14 kg Cpd. A | 10 |
| 0.84 kg bentazon; 0.28 kg Cpd. A | 15 |
| 0.84 kg bentazon; 0.56 kg Cpd. A | 30 |
| 1.68 kg bentazon (Alone) | 16.6 |
| 1.68 kg bentazon; 0.14 kg fluazifop-butyl | 42 |
| 1.68 kg bentazon; 0.28 kg fluazifop-butyl | 60 |
| 1.68 kg bentazon; 0.56 kg fluazifop-butyl | 78 |
| 1.68 kg bentazon; 0.14 kg Cpd. A | 22 |
| 1.68 kg bentazon; 0.27 kg Cpd. A | 25 |
| 1.68 kg bentazon; 0.56 kg Cpd. A | 40 |

## Example 4

Substantially the same procedures as those described in Examples 1—3 were repeated except that 0.25% v/v ORTHO® X—77 brand surfactant was used as the surfactant. Additionally, 2-(4-(3-fluoro-5-(trifluoromethyl)-2-pyridinyl)oxy)phenoxy propionic acid, methyl ester (hereinafter "Cpd. B") with BASAGRAN brand bentazon was applied to soybeans and evaluated for phytotoxicity toward soybean plants 6 days after treatment. Results are listed in Table 4.

TABLE 4

| Amount of active ingredients in kg/ha | Average % injury to soybeans |
|---|---|
| 0.84 kg bentazon (alone) | 10 |
| 0.84 kg bentazon; 0.14 kg fluazifop-butyl | 15 |
| 0.84 kg bentazon; 0.28 kg fluazifop-butyl | 25 |
| 0.84 kg bentazon; 0.56 kg fluazifop-butyl | 50 |
| 0.84 kg bentazon; (Alone) | 10 |
| 0.84 kg bentazon; 0.14 kg Cpd. A | 15 |
| 0.84 kg bentazon; 0.28 kg Cpd. A | 15 |
| 0.84 kg bentazon; 0.56 kg Cpd. A | 20 |
| 0.84 kg bentazon; (Alone) | 10 |
| 0.84 kg bentazon; 0.14 kg Cpd. B | 15 |
| 0.84 kg bentazon; 0.28 kg Cpd. B | 20 |
| 0.84 kg bentazon; 0.56 kg Cpd. B | 20 |
| 1.68 kg bentazon (Alone) | 15 |
| 1.68 kg bentazon; 0.14 kg fluazifop-butyl | 30 |
| 1.68 kg bentazon; 0.28 kg fluazifop-butyl | 45 |
| 1.68 kg bentazon; 0.56 kg fluazifop-butyl | 55 |
| 1.68 kg bentazon; (Alone) | 15 |
| 1.68 kg bentazon; 0.14 kg Cpd. A | 20 |
| 1.68 kg bentazon; 0.28 kg Cpd. A | 25 |
| 1.68 kg bentazon; 0.56 kg Cpd. A | 35 |
| 1.68 kg bentazon; (Alone) | 15 |
| 1.68 kg bentazon; 0.14 kg Cpd. B | 20 |
| 1.68 kg bentazon; 0.28 kg Cpd. B | 25 |
| 1.68 kg bentazon; 0.56 kg Cpd. B | 40 |

On repeating the procedures described in the above examples employing a combination of benzothiadiazinone herbicides and pyridyloxyphenoxy propionate herbicides containing a substituent other than hydrogen in the 3-position of the pyridine ring, substantially the same results are obtained, i.e., less damage to soybean plants when compared to the combination of benzothiadiazinones and pyridyloxyphenoxy propionates having hydrogen as the substituent in the 3-position of the pyridine ring.

In further embodiments, the broad spectrum herbicidal compositions of the present invention can be advantageously employed in combination with one or more additional pesticidal compounds. Such additional pesticidal compounds may be insecticides, nematocides, arthropodicides, herbicides, fungicides or bactericides that are compatible with the compositions of the present invention and non-phytotoxic to soybeans when applied thereto. Accordingly, in such embodiments, the additional pesticidal compounds are employed as supplemental toxicants for the same or for different pesticidal uses, or as additaments.

**Claims**

1. A method of selectively controlling broadleaf weeds and grassy weeds in a soybean crop by the application of a combination consisting of:

(a) a 2-(4-(3-chloro/fluoro)-5-(trifluoromethyl)-2-pyridinyl)oxy)-phenoxy propionic acid, or an agriculturally acceptable salt, $C_{1-8}$ alkyl- or $C_3$—$C_6$ alkoxyalkyl-ester, or amide thereof;

(b) a benzothiadiazinone broadleaf weed herbicide having the formula

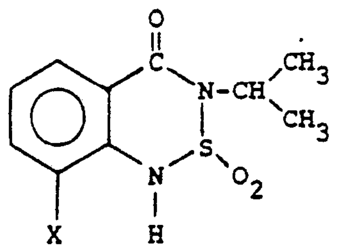

wherein

X is a hydrogen, chlorine, bromine or fluorine atom, a $C_{1-8}$ alkyl or nitro group; or a salt thereof.

2. A method as claimed in claim 1 wherein the pyridyloxyphenoxy propionate grass herbicide is a butyl, methyl or ethoxyethyl ester of 2-(4-(3-chloro-5-(trifluoromethyl)-2-pyridinyl)oxy)phenoxy propionic acid.

3. A method as claimed in claim 1 wherein the pyridyloxyphenoxy propionate grass herbicide is a butyl, methyl or ethoxyethyl ester of 2-(4-(3-fluoro-5-(trifluoromethyl)-2-pyridinyl)oxy)phenoxy propionic acid.

4. A method as claimed in any one of the preceding claims wherein the benzothiadiazinone herbicide is 3-(1-methylethyl)-1H-2,1,3-benzothiadiazinone-4-(3H)-one-2,2-dioxide.

5. A method as claimed in claim 4 wherein the benzothiadiazinone herbicide is used in an amount to provide 0.56 to 1.68 kg/ha in combination with a $C_1$—$C_8$ alkyl or $C_{3-6}$ alkoxyalkyl-ester of 2-(4-(3-chloro-5-(trifluoromethyl)-2-pyridyl)oxy)phenoxy propionic acid which is used in an amount to provide 0.034 to 0.56 kg/ha.

**Patentansprüche**

1. Verfahren zur selektiven Kontrolle von breitblättrigen und grasartigen Unkräutern in einer Sojabohnen-Ernte durch Anwendung einer Kombination bestehend aus

a) einer 2-(4-(3-Chlor/Fluor)-5-(trifluormethyl)-2-pyridinyl)oxy)-phenoxy-propionsäure oder einem landwirtschaftlich annehmbaren Salz, einem $C_{1-8}$-Alkyl- oder einem $C_3$—$C_6$-Alkoxyalkylester, oder einem Amid davon;

b) einem Benzothiadiazinon-Herbizid für breitblättriges Unkraut mit der Formel

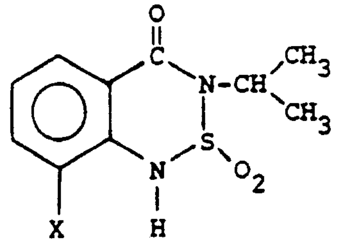

wobei

X ein Wasserstoff-, Chlor-, Brom- oder Fluoratom, eine $C_{1-8}$-Alkyl oder Nitrogruppe ist, oder einem Salz davon.

2. Verfahren nach Anspruch 1, worin das Pyridyloxyphenoxypropionat-Gras-Herbizid ein Butyl-, Methyl- oder Ethoxyethylester der 2-(4-(3-Chlor-5-(trifluormethyl)-2-pyridinyl)-oxy)-phenoxy-propionsäure ist.

3. Verfahren nach Anspruch 1, worin das Pyridyloxyphenoxypropionat-Gras-Herbizid ein Butyl-, Methyl- oder Ethoxyethylester der 2-(4-(3-Fluor-5-(trifluormethyl)-2-pyridinyl)-oxy)-phenoxy-propionsäure ist.

4. Verfahren nach einem der vorhergehenden Ansprüche, worin das Benzothiadiazinon-Herbizid 3-(1-Methylethyl)-1H-2,1,3-benzothiadiazinon-4-(3H)-on-2,2-dioxid ist.

5. Verfahren nach Anspruch 4, worin das Benzothiadiazinon-Herbizid in einer Menge verwendet wird, um 0,56 bis 1,68 kg/ha zur Verfügung zu stellen, in Verbindung mit einem $C_1$—$C_8$-Alkyl- oder $C_{3-6}$-Alkoxyalkylester der 2-(4-(3-Chlor-5-(trifluormethyl)-2-pyridyl)oxy)-phenoxy-propionsäure, der in einer Menge verwendet wird, um 0,034 bis 0,56 kg/ha zur Verfügung zu stellen.

## Revendications

1. Procédé de lutte sélective contre les mauvaises herbes latifoliées et les mauvaises herbes herbacées dans une culture de soja, par application d'une combinaison constituée

(a) d'un acide 2-(4-(3-chloro/fluoro-5-(trifluorométhyl)-2-pyridinyl)oxy)-phénoxypropionique ou d'un de ses sels, esters d'alkyle en $C_1$—$C_8$ ou d'alcoxyalkyle en $C_3$—$C_6$, ou amides, acceptable en agriculture;

(b) d'un herbicide pour mauvaise herbe latifoliée de type benzothiadiazinone répondant à la formule

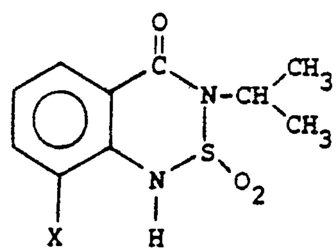

dans laquelle X est un atome d'hydrogène, de chlore, de brome ou de fluor, ou un groupe alkyle en $C_1$—$C_8$ ou nitro; ou un de ses sels.

2. Procédé selon la revendication 1, dans lequel l'herbicide pour mauvaise herbe herbacée de type pyridyloxyphénoxypropionate est un ester butylique, méthylique ou éthoxyéthylique de l'acide 2-(4-(3-chloro-5-(trifluorométhyl)-2-pyridinyl)oxy)-phénoxypropionique.

3. Procédé selon la revendication 1, dans lequel l'herbicide pour mauvaise herbe herbacée de type pyridyloxyphénoxypropionate est un ester butylique, méthylique ou éthoxyéthylique de l'acide 2-(4-(3-fluoro-5-(trifluorométhyl)-2-pyridinyl)oxy)-phénoxypropionique.

4. Procédé selon l'une quelconque des revendications précédentes, dans lequel l'herbicide de type benzothiadiazinone est le 3-(1-méthyléthyl)-1H-2,1,3-benzothiadiazinone-4-(3H)-one-2,2-dioxyde.

5. Procédé selon la revendication 4, dans lequel l'herbicide de type benzothiadiazinone est utilisé en une quantité fournissant 0,56 à 1,68 kg/ha en combinaison avec un ester d'alkyle en $C_1$—$C_8$ ou d'alcoxyalkyle en $C_3$—$C_6$ d'acide 2-(4-(3-chloro-5-(trifluorométhyl)-2-pyridyl)oxy)-phénoxypropionique qui est utilisé en une quantité fournissant 0,034 à 0,56 kg/ha.